# EUROPEAN PATENT SPECIFICATION

(11) **EP 2 432 418 B1**
(45) Date of publication and mention of the grant of the patent: **05.06.2013**
(21) Application number: 10717861.8
(22) Date of filing: 28.04.2010
(51) Int. Cl.: A61C 17/34

(54) **OSCILLATORY SYSTEM FOR A MOTORIZED DRIVE UNIT**
SCHWINGUNGSSYSTEM FÜR EINE MOTORISIERTE ANTRIEBSEINHEIT
Système oscillatoire pour unité de commande motorisée

(30) Priority: 02.05.2009 EP 09006043
(43) Date of publication of application: 28.03.2012
(73) Proprietor: Braun GmbH, 61476 Kronberg/Taunus (DE)
(72) Inventor: JUNGNICKEL, Uwe, 61462 Koenigstein (DE); HEIL, Benedikt, 61239 Ober-Moerlen (DE)
(86) International application number: PCT/IB2010/051858
(87) International publication number: WO 2010/128433

(56) References cited:
- WO-A-03/054414
- WO-A-03/092535
- WO-A-2008/053455

## Description

### FIELD OF THE INVENTION

The invention relates to an oscillatory system for a motorized drive unit for the generation of a rotary oscillatory movement having a first component and a second component able to oscillate relative to one another around an axis of oscillation, to a drive unit having an electromagnetic drive element and such an oscillatory system and to a small electric appliance having such a drive unit.

### BACKGROUND OF THE INVENTION

Such oscillatory systems serve, for example, for use in direct drives which can carry out movements without any further mechanical transmission elements. It is, for example, desirable in the drive of electric toothbrushes if a rotary oscillatory movement can be generated in this manner around a drive shaft axis and, in addition, a translatory oscillatory movement, for example a radial movement. For this purpose, the drive represents an oscillatory system which can oscillate in a plurality of degrees of freedom. The journaling of the two components able to oscillate with respect to one another is realized in this respect by ball bearings, for example.

A drive unit which can generate a movement having a plurality of degrees of freedom, of which one in particular is a rotary oscillatory movement, is described in WO 2005/062445 A1. The motor here includes a spring mass system as the oscillatory system, with an oscillatory mass being connected to a housing, for example, via a coil spring or a torsion spring element.

WO 03/054414 A1 describes a rotational spring having a base member in the form of a ring and elements for fixedly attaching it to a body of an appliance such as a power toothbrush. The rotational spring has an upper member in the form of a disc having a central opening through which a drive shaft of a drive element is fitted such that the disc member rotates with rotation of the drive shaft. Three leg members extend between disc member and base ring member.

One disadvantage of such a rotational spring is the longitudinal space required for this specific design. It also is not optimal if additional oscillatory motions should be performed by the drive shaft, where the spring should provide a restoring force.

Document WO2008053455A1 describes a spring mass system for use in an electric toothbrush, which spring mass system is connected to a motor or a handle of the electric toothbrush. In an embodiment, the spring mass system is a cross-hinge spring, also referred to as a flexible pivot, which could be either metal or plastic. The spring members secure a curved element to a motor-mounted member.

It is the object of the present invention to set forth an oscillatory system for a drive unit for the generation of a relative rotary oscillatory movement, said oscillatory system realizing a journaling and spring function in a simple manner and enabling a compact structure of a drive unit.

### SUMMARY OF THE INVENTION

This object is satisfied by an oscillatory system having the features of claim 1. Claim 11 relates to a drive unit having such an oscillatory system and claim 12 is directed to a small electric appliance of such a drive unit. Dependent claims describe preferred aspects.

The oscillatory system in accordance with the invention serves for a drive unit for the generation of a rotary oscillatory condition. It includes a first oscillatory component and a second oscillatory component, which can oscillate relative to one another around an axis of oscillation and which carry out a relative rotary oscillatory movement with respect to one another. The oscillatory system in accordance with the invention has at least two elongate spring elements which are elastic at least in the direction of the rotary oscillatory movement. Each of these spring elements has two fastening points spaced apart from one another in each case. One of these fastening points is respectively connected to the first oscillatory component and the other fastening point is connected to the second oscillatory component. The spring elements therefore connect the first oscillatory component and the second oscillatory component to one another, but permit a rotary oscillatory movement due to their elasticity in its direction. The at least two elongate spring elements are arranged such that the connection line of the fastening points of a first spring element and the connection line of the fastening points of a second spring element cross at an angle of intersection which is different from 0°. The spring elements have a profiling so that the stiffness of the oscillatory system is different in different spatial directions.

The two oscillatory components are connected to one another in this manner. Due to the elasticity of the spring elements, however, a relative rotary oscillatory movement is possible around the point of intersection of the connection lines of the respective fastening points.

A different oscillatory capability is achieved in different directions by a suitable profiling of the spring elements.

The spring arrangement formed in this manner allows both the journaling and the spring function of two oscillatory components relative to one another which can be realized with relatively simple components. Other journaling elements such as ball bearings or slide bearings are not necessary so that the oscillatory system in accordance with the invention ensures a very cost-effective structure.

In an embodiment, the spring elements intersect in the axis of oscillation and in particular the virtual axis of intersection formed by the intersected spring angle is colinear to a drive axle which is rotarily driven by a motor to generate the rotary oscillatory movement.

On a suitable selection of the spring elements, a movement in the translatory direction is also possible radially to the axis of oscillation, with a setting of the respective oscillatory properties, in particular of the frequency and of the amplitude, being possible in a simple manner by a suitable selection of materials and shape of the spring elements.

A particularly simple and effective embodiment provides that the spring elements include leaf springs whose leaf spring surfaces are parallel to a respective plane which includes the axis of oscillation. Leaf springs are simple to manufacture and provide the elasticity around an axis which is disposed in its leaf spring surface with a simultaneously higher stiffness in other spatial directions.

The leaf springs can be made of sheet metal, for example. A cost-effective embodiment provides that the leaf springs of the system are bent from a common sheet metal part so that only a punching process is required.

The first and the second oscillatory components can be made of plastic, for example, preferably as injection molded plastic parts. It is then possible in a simple manner to overmold the spring elements with these plastic parts during the manufacturing process so that the first and the second oscillatory components and the spring elements are already fixedly connected to one another in the injection process. The spring elements can the include leaf springs which are made from regular sheet metal part. In this manner, a compact and fixed unit is created of oscillatory components and spring elements.

Another embodiment with very low manufacturing costs realizes the whole oscillatory system from a plastic part.

The stiffness of the oscillatory system in different spatial directions can be set differently by selection of the angle of intersection between the spring elements. If the angle of intersection amounts to 90°, for example, the stiffness for a translatory movement with otherwise equal properties of the two spring elements in a direction transverse to the axis of oscillation and from one oscillatory component to the other is the same as the stiffness in the direction perpendicular thereto, with the angle of intersection between a part of a first spring element which is connected to the first oscillatory component and a part of a second spring element which is connected to the second oscillatory component being measured. The system then substantially represents a rotary bearing.

If, in contrast, an angle of intersection is selected which is not equal to 90°, the stiffness values in different transverse directions to the axis of oscillation can be selected at different levels. If, for example, an angle of intersection is selected which is less than 90°, the system is softer in a direction from the first oscillatory component to the second oscillatory component than in a direction perpendicular thereto.

A further developed embodiment has spring elements which are also additionally elastic in a direction parallel to the axis of oscillation. In this manner, an axial oscillatory movement can also be generated. A realization which is simple to manufacture and is reliable provides that leaf springs which have a main leaf spring surface including the axis of oscillation are used. The ends of the leaf springs in the vicinity of the fastening points are, however, preferably bent by approximately 90° so that there is also increased elasticity in the direction of the axis of oscillation in this region. If a plurality of such leaf springs is arranged next to one another, an almost linear movement is possible parallel to the axis of oscillation in this manner so that a linear bearing is realized.

The total oscillatory system can in turn be suspended in an oscillatory manner, for example in a housing. In this respect, similar intersected spring arrangements, which include leaf springs, for example, can be used as for the oscillatory system itself. On a corresponding embodiment of these springs made as suspension elements, the first oscillatory component then oscillates in phase opposition to the second oscillatory component. For example, the suspension elements can be arranged substantially parallel to the spring elements. For example, in particular on the use in an electric toothbrush in which an oscillatory component is fastened in the housing in this manner, the oscillations which can be felt at the hand piece are considerably reduced.

A drive unit in accordance with the invention has an electromagnetic drive element, preferably in the form of an electric motor, and an oscillatory system in accordance with the invention. One of the oscillatory components of the oscillatory system is rotationally fixedly connected to the electromagnetic drive element and the other oscillatory component is connected to the drive axle of the electromagnetic drive element.

An electromagnetic drive element is preferably used which provides a rotary oscillatory movement and a translatory oscillatory movement.

Such a drive unit with an electromagnetic drive element is particularly suitable for the drive of a small electric appliance since a compact and simple structure is possible. Such small electric appliances which can be driven by a drive unit in accordance with the invention include electric razors and electric toothbrushes, for example, in which a rotary oscillatory movement is frequently combined with a translatory oscillation movement.

A drive unit in accordance with the invention is particularly suitable for a small electric appliance such as an electric toothbrush, with the brush head being connected to one of the oscillatory components of the oscillatory system, preferably to that oscillatory component which is connected to the drive axle of the electromagnetic drive element.

### BRIEF DESCRIPTION OF THE DRAWINGS

The invention will be described with reference to embodiments which are shown by way of example in the enclosed Figures. There are shown:
- Fig. 1: a perspective and partly open representation of an electric toothbrush with an oscillatory system;
- Fig. 2: another perspective representation of a part of this electric toothbrush;
- Fig. 3: a partly transparently illustrated plan view of the end face of this part;
- Fig. 4a: a schematic representation of an embodiment of an oscillatory system;
- Fig. 4b: a schematic perspective representation of this embodiment;
- Fig. 5a: a detail of a second embodiment of an oscillatory system;
- Fig. 5b: this detail in the built-in state;
- Fig. 6a: a schematic representation of a third embodiment of an oscillatory system in accordance with the invention;
- Fig. 6b: a schematic perspective representation of this embodiment;
- Fig. 7a: a schematic perspective representation of a fourth embodiment oscillatory system;
- Fig. 7b: a schematic plan view of an end face of this embodiment;
- Fig. 7c: a schematic plan view of the side of this oscillatory system;
- Fig. 7d: a schematic plan view of the side of this embodiment in a different operating state;
- Fig. 8a: a perspective view of a fifth embodiment of an oscillatory system;
- Fig. 8b: a side view of this embodiment;
- Fig. 9: a partly open view of an electric toothbrush with an oscillatory system in accordance with a sixth embodiment; and
- Fig. 10: a sectional view of this embodiment of the oscillatory system in the direction of view of the axis of oscillation.

### DETAILED DESCRIPTION OF THE INVENTION

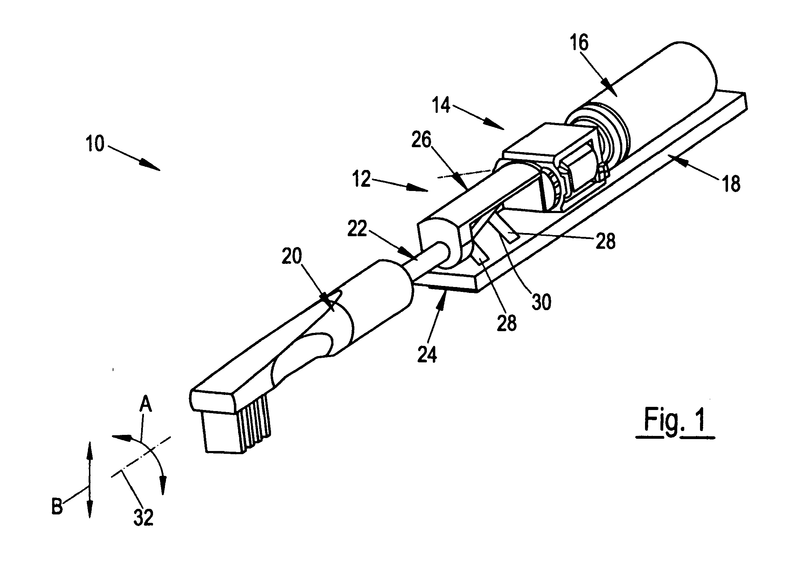

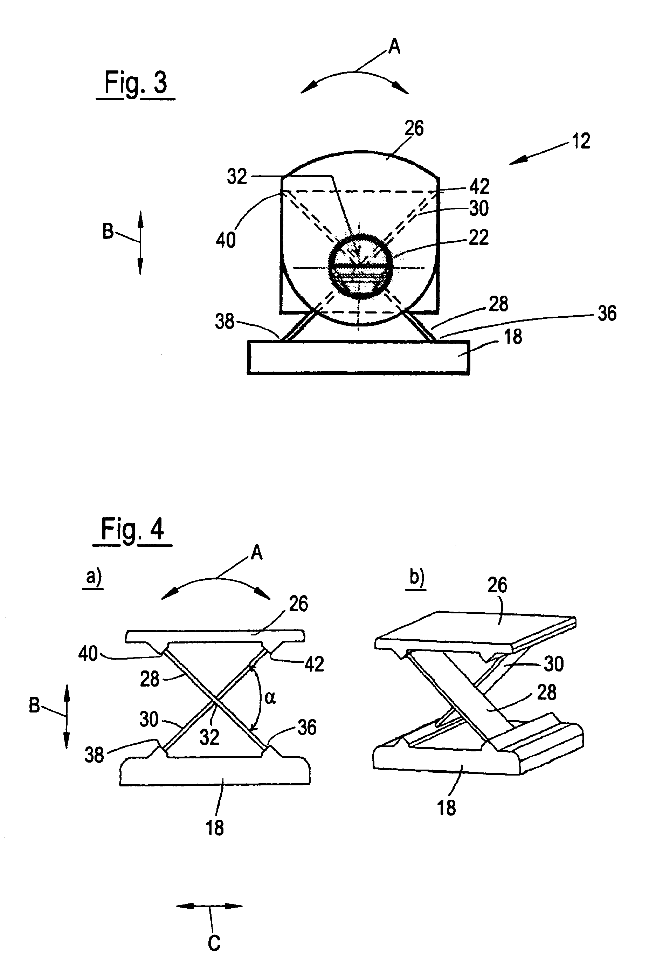

Fig. 1 shows some relevant parts of an exemplary embodiment of a small electric appliance as proposed realized as an electric toothbrush 10. An electromagnetic drive element 14 (here: a motor) is connected to a battery 16 for being provided with energy during operation. The electromagnetic drive element and the battery are fastened to a chassis 18. A first oscillatory component 26 of an oscillatory system 12 is connected to the output axle of the electromagnetic drive element. Spring elements 28, 30 realized as leaf springs connect the first oscillatory component 26 (serving as moving part of the oscillator) to the chassis which in this respect forms the second oscillatory component 18 (serving as stationary part of the oscillator, as the chassis will be held by a users hand during operation) of the oscillatory system 12. A rotary output force is provided by the electromagnetic drive element 14 via its output axle, which results in a relative rotary oscillatory movement in the direction A between the first oscillatory component 26 and the second oscillatory component 18. In the shown embodiment, the spring element 28 intersects with the spring element 30 in the axis of oscillation 32 around which this rotary oscillatory movement takes place. It is relevant that the connecting lines that connect the fastening points 36, 40 and 38, 42 (reference is made to Fig. 3) of each of the spring elements intersect at the axis of oscillation 32 and that this intersection happens on the connecting lines between the fastening points. It is to be noted that the spring elements 28, 30 extend in a direction perpendicular to the axis of oscillation 32, resulting in limited longitudinal space required for realization of the proposed small electric appliance.

The electromagnetic drive element 14 is made such that it can additionally stimulate a translatory oscillatory movement in the direction B, which can be passed on by the oscillatory system 12. The movement of the first oscillatory component 26 is passed on via the output shaft 22 of the oscillatory system 12 to the detachably attached brush head 20, which in this respect carries out a rotary oscillatory movement in direction A and a translatory oscillatory movement in direction B. A circuit board 24 is provided beneath the second oscillatory component 18.

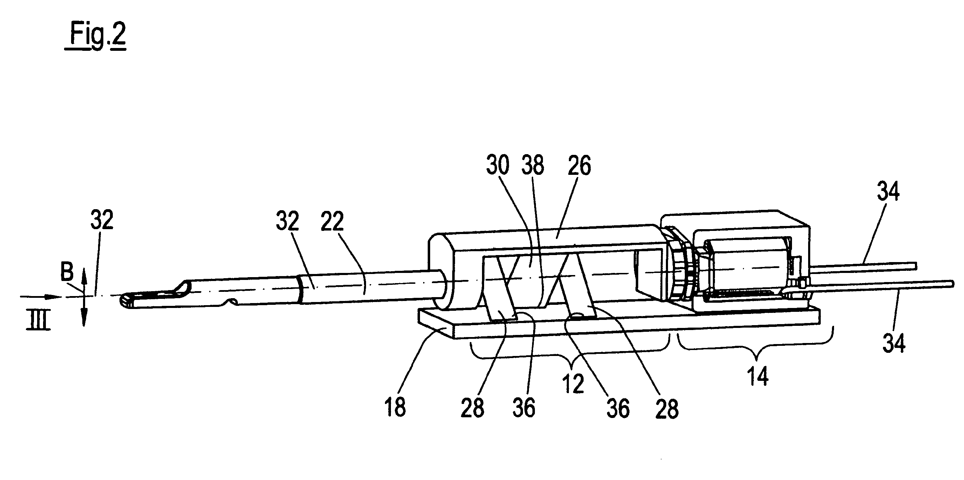

Fig. 2 shows this embodiment in detail. Power feeds 34 are visible which connect the electromagnetic drive element 14 to the battery 16, not shown here. The electric toothbrush is shown without the brush head 20. The fastening points 36, 38 of the spring elements 28, 30 at the second oscillatory component 18 are shown in more detail in Fig 3.

Fig. 3 shows a partly transparently shown plan view of the embodiment of Figs. 1 and 2 in the direction of view III, such as is set forth in Fig. 2. Here, the fastening points 40, 42 of the spring elements 28, 30 at the first oscillatory component 26 and the second oscillatory component 18 are shown.

Fig. 4a shows a schematic representation of an oscillatory system such as it can be used in this embodiment. Whereas Fig. 4a shows a schematic plan view in the direction of the pivot axis, Fig. 4b is a corresponding perspective representation. For reasons of clarity, however, only two spring elements 28, 30 are shown here. α designates their angle of intersection.

As can in particular be recognized in Fig. 4a, the spring elements 28, 30 intersect in the axis of oscillation 32 which, on the other hand, is colinear or parallel to the output shaft of the electromagnetic drive element.

The embodiment shown with reference to Figs. 1 to 4 is used as follows. The electromagnetic drive element generates a rotary oscillatory movement of the first oscillatory component 26. A rotary oscillation around the axis of oscillation 32 is possible due to the cross-wise arrangement of the spring elements 28, 30. The leaf spring design of the crossed spring elements 28, 30 additionally enables a translatory oscillatory movement in direction B, for example, with a very high stiffness being given due to the cross-wise arrangement of the spring elements. If the electromagnetic drive element 14 additionally provides a linear oscillatory movement, the first oscillatory component 26 moves, on the one hand, relative to the second oscillatory component 18 around the axis of oscillation 32 and, on the other hand, carries out a pulsation movement in the direction B.

By a suitable choice of the material of the springs 28, 30, their stiffness and thus the oscillatory amplitude and resonant frequency of the respective oscillation can be set to the desired degree and can optionally be selectively excited.

The example shown in Fig. 4 is an oscillatory system in which the spring elements 28, 30 intersect at an angle α amounting to 90°. The stiffness in the linear direction B and in the linear direction C is accordingly comparable.

If the angle α is selected to be less than 90°, for example 60°, the stiffness is reduced in direction B with respect to the stiffness in the direction C. In this way, the resonant frequencies of the oscillations can also be set differently in different directions and can, for example, preferably trigger the desired oscillatory manner by excitation of the respective resonant frequency.

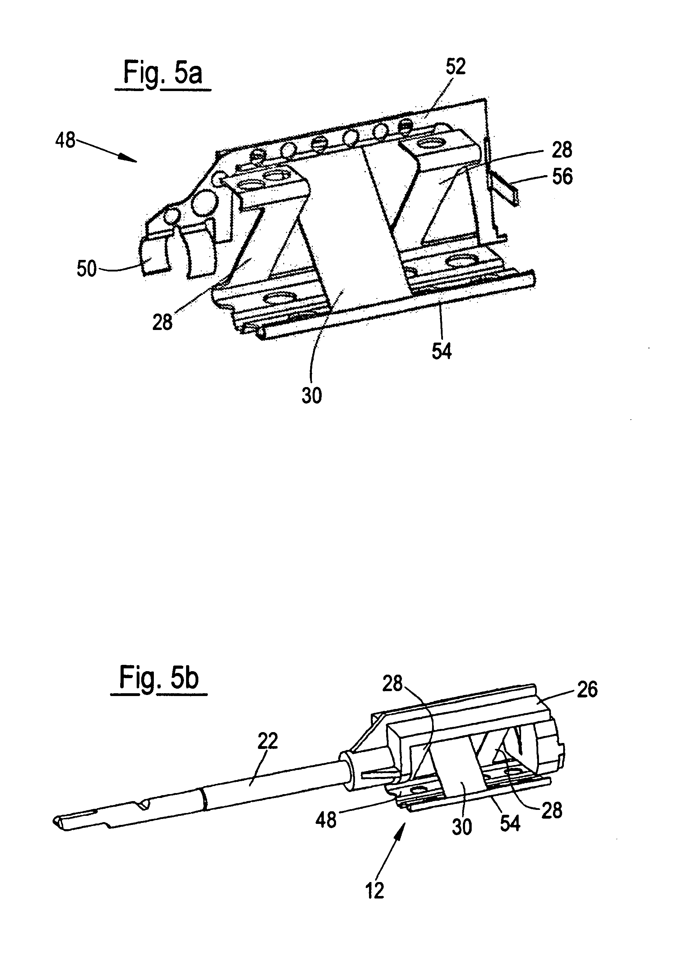

Fig. 5a shows a detail of the embodiment of Figs. 1 to 4. A bent sheet metal part 48 is in particular visible which is bent in one piece to form the spring elements 28, 30. In this respect, the spring elements 28, 30 are connected to one another via the chassis fastening 54 by which the bent sheet metal part 48 can be screwed, for example, to the second oscillatory component 18. A connection element 52 is, for example, fixedly connected to the part of the leaf spring 30 at the top in Fig. 5a. An enclosure for the output shaft 22 of the first oscillatory component 26 is indicated by reference numeral 50, whereas reference numeral 56 indicates a motor coupling element to the output of the electromagnetic drive element 14. The part of the bent sheet metal part 48 at the top in Fig. 5a which includes the connection element 52 and the upper parts of the spring elements 28, 30 is overmolded in the injection molding process by which the first oscillatory component 26 is formed as a plastic part. In this manner, the bent sheet metal part 48 is fixedly connected to the first oscillatory component 26 and/or to the second oscillatory component 18, as can be recognized in Fig. 5b.

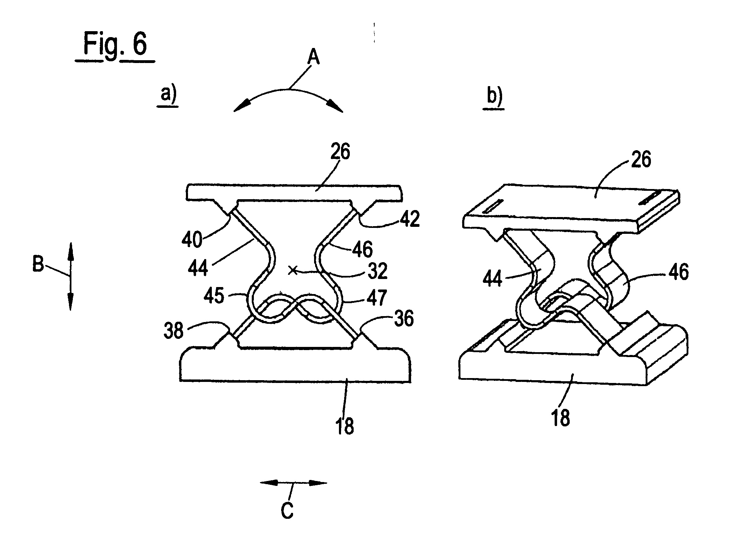

Fig. 6 shows an oscillatory system of an embodiment in a schematic representation. The spring elements 44, 46 are here not made straight, but have a profiling 45, 47. The axis of oscillation 32 is furthermore located at the point of intersection of two connecting lines between the fastening points 36, 40, on the one hand, and the fastening points 38, 42, on the other hand. However, the stiffness here is in particular reduced in the direction B due to the profiling 45, 47.

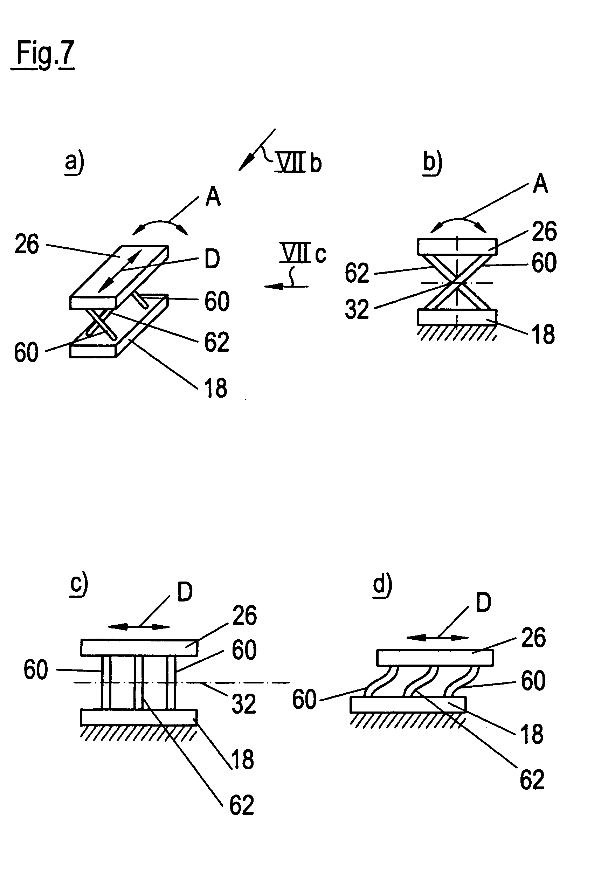

An embodiment is shown in Fig. 7 with which an additional translatory oscillatory movement is possible in direction D. Whereas Fig. 7a shows a perspective schematic view, Fig. 7b shows a plan view in the direction of view VIIb shown in Fig. 7a. The direction of view of Fig. 7c is designated by VIIc in Fig. 7a.

In this embodiment, the spring elements 60, 62 are not made as leaf springs, but as rod springs which have an elasticity around the axis of oscillation 32 and in the axial direction D. The use of three spring elements 60, 62 enables an almost linear movement in the direction D parallel to the axis of oscillation 32, as is indicated in Fig. 7d, which shows the same direction of view to this embodiment as Fig. 7c, only in a different operating state in which the first oscillatory component 26 and the second oscillatory component 18 are displaced in the direction D with respect to one another. If accordingly a linear oscillatory movement along the axis of oscillation 32 is provided by the electromagnetic drive element 14 in addition to the rotary oscillatory movement in the direction A around the axis of oscillation 32 in such an embodiment, the rotary oscillatory movement A can be combined with a linear oscillation in the axial direction D.

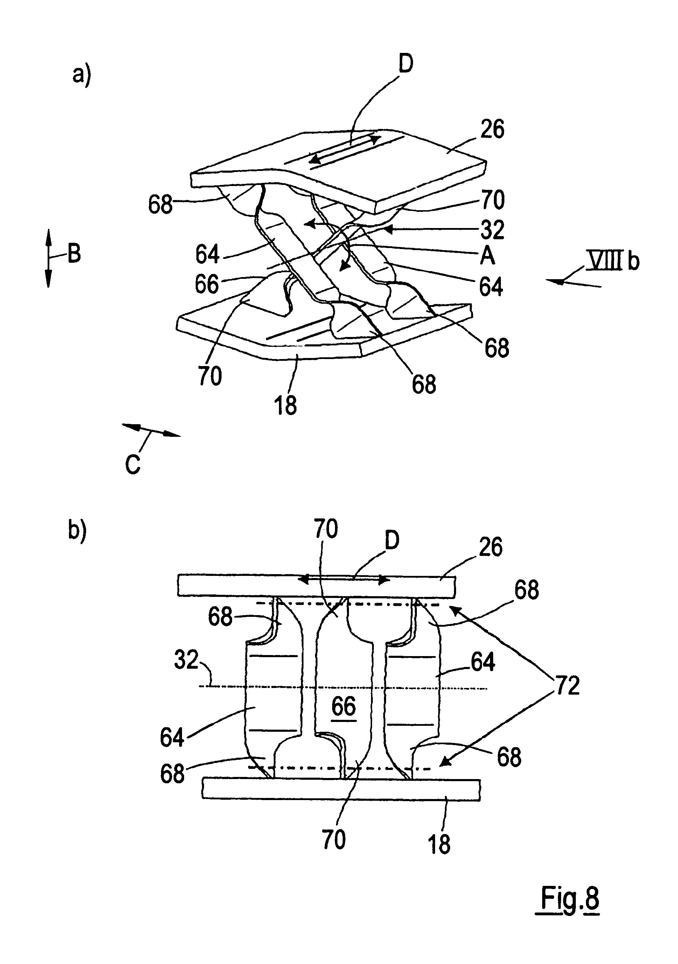

Fig. 8 shows an improved embodiment of the system of Fig. 7.

The spring elements are here in turn made as leaf springs 64, 66, with the main leaf spring surface including the axis of oscillation 32. The ends 68, 70 of the leaf springs 64, 66 are, however, bent by 90° in the region of the fastening points to the second oscillatory component 18 or to the oscillator 26. In the region of the ends 68, 70 of the leaf springs, a respective bending plane 72 is defined in this manner which is shown in chain-dotted form in Fig. 8b. Fig. 8b shows in this respect a plan view of the system of Fig 8a in the direction of view VIIIb.

A reduced stiffness in the direction D is given in the region of the ends 68, 70 of the leaf springs so that the linear movement becomes possible in this direction, as is shown in Fig. 8b.

The individual embodiments can naturally also be combined so that, for example by a suitable choice of the angle of intersection between the leaf springs 64, 66 in the embodiment of Fig. 8, the stiffness in the direction B is reduced with respect to the stiffness in the direction C so that a translatory oscillatory movement in the direction B can be combined with an axial oscillatory movement in the direction D and a rotary oscillatory movement in the direction A when the electromagnetic drive element 14 stimulates corresponding movements.

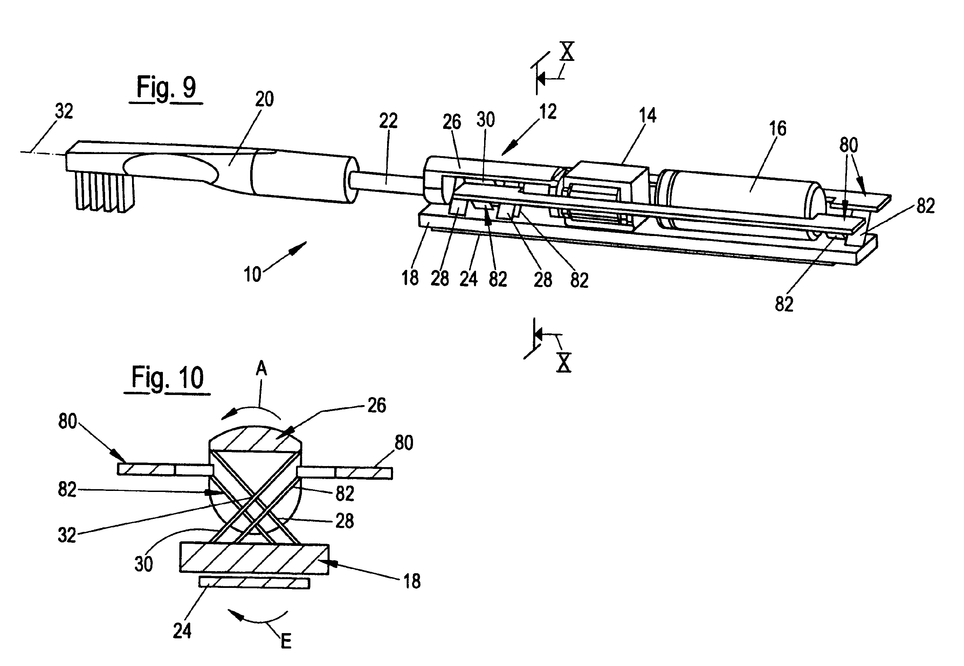

Figs. 9 and 10 again start from an embodiment of Figs. 1 to 4, but show a possible suspension of the system which - with a corresponding design - can also be used with other embodiments. In this respect, Fig. 10 shows a section through the electric toothbrush shown on Fig. 9 in the sectional plane indicated in Fig. 9 with a view in the direction X to this plane. The second oscillatory component 18 is here connected via suspension elements 82 to frame elements 80 which are, on the other hand, connected to the housing of the electric toothbrush not shown in Fig. 9. The suspension elements 82 are in this respect made in the same way as the spring elements 28, 30 via which the second oscillatory component 18 and the first oscillatory component 26 are connected to one another in the described manner. The suspension elements in this embodiment include leaf springs 82 which are arranged parallel to the spring elements 28, 30. If the electromagnetic drive element 14 provides a rotary oscillatory movement, the second oscillatory component 18 oscillates in phase opposition to the first oscillatory component 26 in the direction E. In this manner, in particular with an electric toothbrush, the vibrations onto the housing forming a handle of the electric toothbrush and not shown in Fig. 9 can be reduced.

## Claims

1. An oscillatory system (12) for a drive unit for the generation of a rotary oscillatory movement (A) having first and second components (18, 26) able to oscillate relative to one another around an axis of oscillation (32), comprising at least two elongate spring elements (28, 30, 44, 46, 60, 62, 64, 66) which are elastic at least in the direction of the rotary oscillatory movement (A) and each having two respective fastening points (36, 40; 38, 42) which are spaced apart from one another, wherein, for each of the at least two elongate spring elements, one fastening point is connected to the first oscillatory component and one fastening point is connected to the second oscillatory component and the connection line of the fastening points (36, 40) of at least one spring element (28) and the connection line of the fastening points (38, 42) of at least one other spring element (30) intersect at an angle of intersection (α) different from 0 degrees, **characterised in that** the spring elements (44, 46) are not made straight but have a profiling (45, 47) so that the stiffness of the oscillatory system (12) is different in different spatial directions.

2. The oscillatory system according to the previous claim, wherein the connection lines between the fastening points (36, 40; 38, 42) of each of the spring elements intersect at the axis of oscillation (32) of the oscillatory system.

3. The oscillatory system in accordance with claim 1 or claim 2, wherein the spring elements include leaf springs (28, 30, 44, 46, 64, 66) whose leaf spring surfaces are parallel to a respective plane which includes the axis of oscillation (32).

4. The oscillatory system in accordance with any one of the claims 1 to 3, wherein the spring elements (28, 30) are partly overmolded at least by an injection molded plastic part (26) forming one of the two oscillatory components.

5. The oscillatory system in accordance with any one of the claims 1 to 3, wherein at least one of the spring elements (28, 30) is integral with at least one of the oscillatory components (18, 26).

6. The oscillatory system in accordance with any one of the claims 1 to 5, wherein the angle of intersection (α) is 90 degrees, with the angle of intersection being measured between a part of a first spring element (28) which is connected to the first oscillatory component and a part of a second spring element (30) which is connected to the second oscillatory component.

7. The oscillatory system in accordance with any one of the claims 1 to 5, wherein the angle of intersection (α) is different from 90 degrees.

8. The oscillatory system in accordance with any one of the claims 1 to 7, **characterized in that** the spring elements (60, 62, 64, 66) are additionally elastic in a direction (D) parallel to the axis of oscillation (32).

9. The oscillatory system in accordance with claim 8, wherein the spring elements include leaf springs (64, 66) whose leaf spring surfaces are parallel to a respective plane which includes the axis of oscillation (32) and whose ends (68, 70) are angled, preferably by 90 degrees to this respective plane such that the angled ends (68, 70) are perpendicular to the axis of oscillation (32).

10. The oscillatory system in accordance with any one of the claims 1 to 9, wherein the first oscillatory component is connected via the at least two spring elements to the second oscillatory component and the second component is connected via at least two suspension elements (82) to a housing frame (80) which are made like the spring elements (28, 30, 44, 46, 60, 62 64, 66).

11. A drive unit having an electromagnetic drive element (14), in particular an electric motor, and an oscillatory system (12) in accordance with any one of the claims 1 to 10, wherein one (26) of the oscillatory components (18, 26) of the oscillatory system (12) is rotationally fixed to the electromagnetic drive element (14) and the other oscillatory component (18) is connected to an output axle of the electromagnetic drive element (14).

12. A small electric appliance having a drive unit in accordance with claim 11.

13. The small electric appliance in accordance with claim 12, **characterized in that** it is realized as an electric toothbrush (10) having a brush head (20), with the brush head (20) being connected to one of the oscillatory components (26) of the oscillatory system (12), preferably to the oscillatory component (26) which is connected to the output axle of the electromagnetic element (14).

## Patentansprüche

1. Schwingungssystem (12) für eine Antriebseinheit zur Erzeugung einer Drehschwingbewegung (A) mit einer ersten und einer zweiten Komponente (18, 26), die zueinander um eine Schwingachse (32) schwingen können, umfassend mindestens zwei längliche Federelemente (28, 30, 44, 46, 60, 62, 64, 66), die mindestens in der Richtung der Drehschwingbewegung (A) elastisch sind und jeweils zwei Befestigungspunkte (36, 40; 38, 42) aufweisen, die voneinander beabstandet sind, wobei für jedes der mindestens zwei verlängerten Federelemente ein Befestigungspunkt mit der ersten Schwingungskomponente verbunden ist und ein Befestigungspunkt mit der zweiten Schwingungskomponente verbunden ist und sich die Verbindungslinie der Befestigungspunkte (36, 40) mindestens eines Federelements (28) und die Verbindungslinie der Befestigungspunkte (38, 42) mindestens eines anderen Federelements (30) in einem anderen als 0 Grad betragenden Schnittwinkel (α) schneiden, **dadurch gekennzeichnet, dass** die Federelemente (44, 46) nicht gerade gefertigt sind, sondern eine Profilierung (45, 47) aufweisen, sodass die Steifheit des Schwingungssystems (12) in unterschiedlichen räumlichen Richtungen unterschiedlich ist.

2. Schwingungssystem nach dem vorstehenden Anspruch, wobei sich die Verbindungslinien zwischen den Befestigungspunkten (36, 40; 38, 42) jedes der Federelemente an der Schwingachse (32) des Schwingungssystems schneiden.

3. Schwingungssystem nach Anspruch 1 oder Anspruch 2, wobei die Federelemente Blattfedern (28, 30, 44, 46, 64, 66) aufweisen, deren Blattfederoberflächen parallel zu einer entsprechenden Ebene sind, die die Schwingachse (32) einschließt.

4. Schwingungssystem nach einem der Ansprüche 1 bis 3, wobei die Federelemente (28, 30) mindestens von einem spritzgegossenen Kunststoffteil (26) teilweise überspritzt sind, das eine der zwei Schwingungskomponenten bildet.

5. Schwingungssystem nach einem der Ansprüche 1 bis 3, wobei mindestens eines der Federelemente (28, 30) mit mindestens einer der Schwingungskomponenten (18, 26) einstückig ausgebildet ist.

6. Schwingungssystem nach einem der Ansprüche 1 bis 5, wobei der Schnittwinkel (α) 90 Grad beträgt und der Schnittwinkel zwischen einem Teil eines ersten Federelements (28), das mit der ersten Schwingungskomponente verbunden ist, und einem Teil eines zweiten Federelements (30), das mit der zweiten Schwingungskomponente verbunden ist, gemessen wird.

7. Schwingungssystem nach einem der Ansprüche 1 bis 5, wobei der Schnittwinkel (α) ein anderer als ein 90-Grad-Winkel ist.

8. Schwingungssystem nach einem der Ansprüche 1 bis 7, **dadurch gekennzeichnet, dass** die Federelemente (60, 62, 64, 66) in einer Richtung (D) parallel zu der Schwingachse (32) zusätzlich elastisch sind.

9. Schwingungssystem nach Anspruch 8, wobei die Federelemente Blattfedern (64, 66) aufweisen, deren Blattfederoberflächen parallel zu einer entsprechenden Ebene sind, die die Schwingachse (32) einschließt, und deren Enden (68, 70) vorzugsweise in einem Winkel von 90 Grad zu dieser entsprechenden Ebene derart abgewinkelt sind, dass die abgewinkelten Enden (68, 70) zu der Schwingachse (32) senkrecht sind.

10. Schwingungssystem nach einem der Ansprüche 1 bis 9, wobei die erste Schwingungskomponente durch die mindestens zwei Federelemente mit der zweiten Schwingungskomponente verbunden ist und die zweite Komponente mit einem Gehäuserahmen (80) durch mindestens zwei Aufhängungselemente (82)verbunden ist, die wie die Federelemente (28, 30, 44, 46, 60, 62 64, 66) hergestellt sind.

11. Antriebseinheit mit einem elektromagnetischen Antriebselement (14), insbesondere einem Elektromotor, und einem Schwingungssystem (12) nach einem der Ansprüche 1 bis 10, wobei eine (26) der Schwingungskomponenten (18, 26) des Schwingungssystems (12) an dem elektromagnetischen Antriebselement (14) drehbar befestigt ist und die andere Schwingungskomponente (18) mit einer Abtriebsachse des elektromagnetischen Antriebselements (14) verbunden ist.

12. Elektrokleingerät mit einer Antriebseinheit nach Anspruch 11.

13. Elektrokleingerät nach Anspruch 12, **dadurch gekennzeichnet, dass** es als eine elektrische Zahnbürste (10) mit einem Bürstenkopf (20) realisiert ist, wobei die Bürste (20) mit einer der Schwingungskomponenten (26) des Schwingungssystems (12), vorzugsweise der Schwingungskomponente (26) verbunden ist, die mit der Abtriebsachse des elektromagnetischen Elements (14) verbunden ist.

## Revendications

1. Système oscillant (12) destiné à une unité d'entraînement pour la production d'un mouvement rotatif oscillant (A) ayant des premier et deuxième composants (18, 26) aptes à osciller l'un par rapport à l'autre autour d'un axe d'oscillation (32), comprenant au moins deux éléments de type ressort allongés (28, 30, 44, 46, 60, 62, 64, 66) qui sont élastiques au moins dans la direction du mouvement rotatif oscillant (A) et ayant chacun deux points de fixation respectifs (36, 40 ; 38, 42) qui sont espacés l'un de l'autre, dans lequel, pour chacun des au moins deux éléments de type ressort allongés, un point de fixation est relié au premier composant oscillant et un point de fixation est relié au deuxième composant oscillant et la ligne de raccordement des points de fixation (36, 40) d'au moins un élément de type ressort (28) et la ligne de raccordement des points de fixation (38, 42) d'au moins un autre élément de type ressort (30) se croisent selon un angle d'intersection (α) différent de 0 degré, **caractérisé en ce que** les éléments de type ressort (44, 46) ne sont pas fabriqués linéaires, mais ont un profilage (45, 47) de sorte que la rigidité du système oscillant (12) est différente dans différentes directions spatiales.

2. Système oscillant selon la revendication précédente, dans lequel les lignes de raccordement entre les points de fixation (36, 40 ; 38, 42) de chacun des éléments de type ressort se croisent au niveau de l'axe d'oscillation (32) du système oscillant.

3. Système oscillant selon la revendication 1 ou la revendication 2, dans lequel les éléments de type ressort incluent des ressorts à lames (28, 30, 44, 46, 64, 66) dont les surfaces de ressort à lames sont parallèles à un plan respectif qui inclut l'axe d'oscillation (32).

4. Système oscillant selon l'une quelconque des revendications 1 à 3, dans lequel les éléments de type ressort (28, 30) sont partiellement surmoulés au moins par une pièce en plastique moulée par injection (26) formant un des deux composants oscillants.

5. Système oscillant selon l'une quelconque des revendications 1 à 3, dans lequel au moins l'un parmi les éléments de type ressort (28, 30) est solidaire d'au moins un des composants oscillants (18, 26).

6. Système oscillant selon l'une quelconque des revendications 1 à 5, dans lequel l'angle d'intersection (α) est de 90 degrés, l'angle d'intersection étant mesuré entre une partie d'un premier élément de type ressort (28) qui est reliée au premier composant oscillant et une partie d'un deuxième élément de type ressort (30) qui est reliée au deuxième composant oscillant.

7. Système oscillant selon l'une quelconque des revendications 1 à 5, dans lequel l'angle d'intersection (α) est différent de 90 degrés.

8. Système oscillant selon l'une quelconque des revendications 1 à 7, **caractérisé en ce que** les éléments de type ressort (60, 62, 64, 66) sont en outre élastiques dans une direction (D) parallèle à l'axe d'oscillation (32).

9. Système oscillant selon la revendication 8, dans lequel les éléments de type ressort incluent des ressorts à lames (64, 66) dont les surfaces de ressort à lames sont parallèles à un plan respectif qui inclut l'axe d'oscillation (32) et dont les extrémités (68, 70) sont inclinées, de préférence de 90 degrés par rapport à ce plan respectif de telle sorte que les extrémités inclinées (68, 70) sont perpendiculaires à l'axe d'oscillation (32).

10. Système oscillant selon l'une quelconque des revendications 1 à 9, dans lequel le premier composant oscillant est relié par l'intermédiaire des au moins deux éléments de type ressort au deuxième composant oscillant et le deuxième composant est relié à un châssis de logement (80) par l'intermédiaire d'au moins deux éléments de suspension (82) qui sont fabriqués comme les éléments de type ressort (28, 30, 44, 46, 60, 62 64, 66).

11. Unité d'entraînement comportant un élément d'entraînement électromagnétique (14), en particulier un moteur électrique, et un système oscillant (12) selon l'une quelconque des revendications 1 à 10, dans laquelle un (26) des composants oscillants (18, 26) du système oscillant (12) est fixé en rotation à l'élément d'entraînement électromagnétique (14) et l'autre composant oscillant (18) est relié à un arbre de sortie de l'élément d'entraînement électromagnétique (14).

12. Petit appareil électrique comportant une unité d'entraînement selon la revendication 11.

13. Petit appareil électrique selon la revendication 12, **caractérisé en ce qu'**il est réalisé en tant que brosse à dents électrique (10) ayant une tête de brosse (20), la tête de brosse (20) étant reliée à un des composants oscillants (26) du système oscillant (12), de préférence au composant oscillant (26) qui est relié à l'arbre de sortie de l'élément électromagnétique (14).
